# EUROPEAN PATENT APPLICATION

(11) **EP 3 026 172 A1**
(43) Date of publication of application: **01.06.2016**
(21) Application number: 15196184.4
(22) Date of filing: 25.11.2015
(51) Int. Cl.: D21C 5/02, D21H 17/70

(54) **METHOD FOR TREATING A STREAM OF A DEINKING PLANT AND ITS USE AND PRODUCT**

(30) Priority: 25.11.2014 FI 20146036; 24.11.2015 FI 20155869
(71) Applicant: UPM-Kymmene Corporation, 00100 Helsinki (FI)
(72) Inventor: Solismaa, Päivi, 53130 Lappeenranta (FI); Oberndorfer, Johann, 82178 Puchheim (DE); Männer, Philipp, 86163 Augsburg (DE); Heikkilä, Päivi, 86153 Augsburg (DE); Renner, Katharina, 86956 Schongau (DE); Hytönen, Tomi, 42220 Kaipola (FI); Kourunen, Petri, 42100 Jämsä (FI); Mustonen, Kati, 53100 Lappeenranta (FI); Varvemaa, Janne, Lappeenranta 53100 (FI); Ventola, Meri, 53650 Lappeenranta (FI); Örså, Folke, 53400 Lappeenranta (FI)
(74) Representative: Papula Oy

(57) **Abstract**

The invention relates to a method for treating a stream of a deinking plant, wherein the method comprises: adding calcium containing slurry (11) which comprises calcium compound and CO₂ containing reactant (12) into at least one predetermined water or pulp stream (10) in the deinking plant, and the water or pulp stream (10) is a continuous flow which flows in a tubular type device, and forming precipitated calcium carbonate by precipitating in the predetermined continuous water or pulp stream in the tubular type device. Further, invention relates to a product and use.

## Description

### FIELD OF THE INVENTION

The invention relates to a method for treating a stream of a deinking plant. Further, the invention relates to a product. Further, the invention relates to a use of the method.

### BACKGROUND OF THE INVENTION

Known from prior art is to treat waste paper raw material in different deinking plant processes and to form different product and residue streams.

Further, known from prior art is to produce precipitated calcium carbonate in different ways. From patent publications WO 2009/103853 and WO 2009/103854 are known to produce precipitated calcium carbonate continuously in connection with a paper manufacturing.

### OBJECTIVE OF THE INVENTION

The objective of the invention is to disclose a new method for treating streams of the deinking plant. Further, the objective of the invention is to disclose a method for purifying deinking streams. Further, the objective of the invention is to disclose a new method for producing precipitated calcium carbonate. Further, the objective of the invention is to disclose a new type product. Further, the objective of the invention is to disclose new uses of the method.

### SUMMARY OF THE INVENTION

The method for treating streams of the deinking plant according to the present invention is characterized by what is presented in claim 1.

The product according to the present invention is characterized by what is presented in claim 15.

The use of the method according to the present invention is characterized by what is presented in claim 16.

### BRIEF DESCRIPTION OF THE FIGURES

The accompanying drawings, which are included to provide a further understanding of the invention and constitutes a part of this specification, illustrate some embodiments of the invention and together with the description help to explain the principles of the invention. In the drawings:
Fig. 1 is a flow chart illustration of a method according to one embodiment of the present invention,
Fig. 2 is a flow chart illustration of a method according to another embodiment of the present invention,
Fig. 3 is a flow chart illustration of a method according to another embodiment of the present invention,
Fig. 4 is a flow chart illustration of a waste paper treatment, and
Fig. 5 is a flow chart illustration of a method according to another embodiment of the present invention.

### DETAILED DESCRIPTION OF THE INVENTION

In the method of the present invention a stream of a deinking plant is treated, preferably is purified, in the deinking plant. In the method, calcium containing slurry (11) which comprises calcium compound and CO₂ containing reactant (12) are added into at least one predetermined water or pulp stream (10) in the deinking plant, and precipitated calcium carbonate (PCC) is formed by precipitating in the predetermined water or pulp stream (10). Then a purified stream comprising PCC can be formed. The water or pulp stream (10) is a continuous flow which flows in a tubular type device.

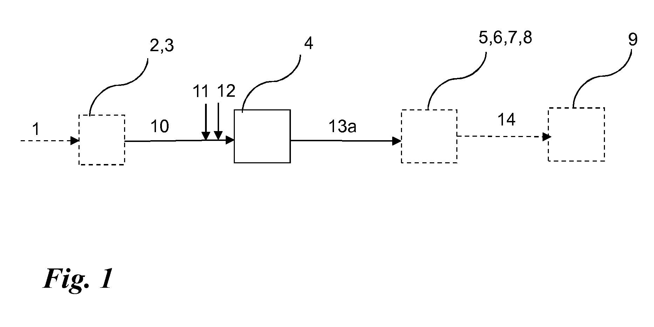

Some method embodiments of the present invention are shown in Figs. 1, 2, 3 and 5.

In this context, calcium containing slurry (11) comprises any calcium compound, e.g. CaO or Ca(OH)₂. In one embodiment, calcium containing slurry comprises lime. In one embodiment, calcium containing slurry is milk of lime. In one embodiment, calcium containing slurry may be any material comprising calcium compound, e.g. calcium or calcium salt based composition. In one embodiment, calcium containing slurry may comprise ash based raw material comprising calcium compound. Alternatively, calcium containing slurry may be other suitable slurry.

In this context, CO₂ containing reactant (12) means any reactant which comprises carbon dioxide (CO₂). In one embodiment, the CO₂ containing reactant is in the form of gas or aqueous solution. In the aqueous solution a part of carbon dioxide may react with water to form carbonic acid, H₂CO₃. In one embodiment, CO₂ containing reactant is CO₂-gas or CO₂ containing solution. In one embodiment, CO₂ containing reactant is CO₂ containing flue gas.

In this context, waste paper means any waste paper or reclaimed paper suitable for treating in any deinking plant or recycled fibre plant or recycled paper plant. Preferably, waste paper comprises a sorted graphical paper with a small amount of unwanted papers, e.g. board. In this context, deinking plant means any deinking plant, de-inking plant, deinking mill, recycled fibre plant, recycled paper plant or other plant in which waste paper can be recycled and treated.

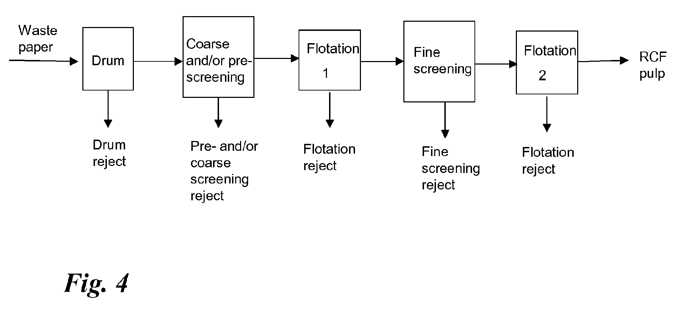

In this context, a water or pulp stream (10) means any water and/or pulp containing stream which can be coming from different waste paper treatment stages of the deinking plant. The water or pulp stream may be a product or residue stream from a deinking plant. In a deinking plant waste paper is treated by means of a waste paper treatment process. Preferably, the waste paper can be treated at a drum stage (2) and/or a batch pulper stage, coarse and/or pre-screening stage (3), flotation stage (4,7), such as first flotation stage (4) and/or second flotation stage (7), and fine screening stage (5). Further, the waste paper treatment process may comprise at least one thickening stage (6,8), such as the first thickening stage (6) after fine screening stage (5) and /or the second thickening (8) stage after the second flotation stage (7). The waste paper treatment process may comprise more than two flotation stages and/or more than two thickening stages. Further, the waste paper treatment process may comprise one or more cleaning stage and/or one or more bleaching stage. One embodiment of waste paper treatment process of the deinking plant is presented in figure 4. The water or pulp stream may include contaminants and/or impurities. Preferably, the water or pulp stream is a continuous flow. In this context, the water stream may be any water or waste water or sewage stream or a combination of different water streams. Further, the water stream may comprise water from a waste water treatment plant, e.g. primary sludge and/or biosludge. In one embodiment, the water stream comprises a reject from a deinking plant. In one embodiment, the water stream comprises a reject from a dissolved air flotation. Water streams may be recirculated in the process or be supplied to a waste water treatment or be utilized as material. In this context, the pulp stream may be any pulp stream. In one embodiment the pulp stream comprises RCF pulp (recycled fiber pulp). In this context, RCF pulp means any RCF pulp from RCF process, i.e. wood based recycled fibre production, of the deinking plant, in which waste paper is treated. Preferably, the pulp stream comprises also water. Pulp stream, such as a RCF pulp stream, from the waste paper treatment process is led to paper manufacturing (9). The water or pulp stream may be in the form of sludge, slurry, suspension or the like. The water or pulp streams may include minerals used in paper coating, filler and printing inks, and fibers, fines, sticky materials like starch, latex and other adhesive or adhesives, and other inorganic components and/or small amount of other components.

In one embodiment, the water or pulp stream (10) is a water stream. In one embodiment, the water or pulp stream is a RCF pulp stream. In one embodiment, the water or pulp stream is a combination of a water stream and a pulp stream.

The reject may be any reject of the deinking plant. The reject means any reject, residue, residue flow and/or side flow from different waste paper treatment stages of the deinking plant. The reject may be in the form of sludge, slurry, suspension or the like. In one embodiment the reject comprises RCF reject (recycled fiber reject). In this context, RCF reject means any RCF reject or sludge or any combination of different RCF rejects from RCF process, i.e. wood based recycled fibre production, of the deinking plant, in which waste paper is treated. In one embodiment, the reject is selected from the group consisting of coarse screening reject, pre-screening reject, first flotation reject, fine screening reject, second flotation reject, dissolved air flotation reject and their combinations.

The dissolved air flotation reject includes residue or residues from the dissolved air flotation process in connection with the waste paper treatment and/or paper manufacturing. The residue from the dissolved air flotation process may be in the form of slurry, suspension or the like. The dissolved air flotation (DAF) process is a water treatment process that clarifies wastewaters or other waters by the removal of suspended matter such as solids or in some embodiment oils or other matter. The removal is achieved by dissolving air in the water or wastewater under pressure and then releasing the air at atmospheric pressure in a flotation tank or basin. The released air forms tiny bubbles which adhere to suspended matter causing the suspended matter to float to the surface of the water where it may then be removed by a skimming device. In the waste paper treatment the dissolved air flotation process is used for cleaning or purifying the process waters coming e.g. from RCF pulp thickening. In the paper manufacturing the dissolved air flotation process is used for cleaning or purifying the process waters. A water-carrying reject, e.g. process water or wastewater, from the waste paper treatment or paper manufacturing is supplied into the dissolved air flotation process, and the slurry or suspension residue from said process is called as a dissolved air flotation reject. In one embodiment, the dissolved air flotation process may be used in connection with the thickening after the flotation and/or the fine screening in the waste paper treatment.

In this context, the ash based raw material includes ash which can be any ash and/or ash type raw material. The ash based raw material may include any ash and/or ash component and/or ash type component, for example combustion residue or gasification residue or char. The ash based raw material can include one or more components. The ash based raw material can be formed from one or more ashes or ash components. The ash based raw material may include also other components. In one embodiment, the ash based raw material is in the form of slurry, dispersion, solution, flush, paste or the like. Alternatively the ash based raw material may be dry component, e.g. in the form of fine pulver or powder. In one embodiment, the ash based raw material is mixed with water to form an ash slurry in a mixing step. Preferably the ash slurry has ash content between 0.1 to 30 % by weight, in one embodiment between 0.1 to 10 % by weight, in one embodiment 5 to 20 % by weight, and in one embodiment between 10 to 15 % by weight. The ash based raw material contains at least calcium compound. Further, the ash based raw material may contain water. Further, the ash based raw material may also contain other agents, compounds or material. In one embodiment, the ash based raw material contains 10 - 30 % by weight calcium oxides. The ash or ash component can be coming from paper industry, paper mill, pulp mill, saw mill, plywood mill, waste paper treatment, deinking process, waste water treatment, gasification and/or other suitable mill or process. The ash can be coming from boiler or lime kiln or gasification or other suitable device in which ash is formed. The ash can be formed by incineration or combustion using any technique in any boiler. The ash can be produced in different incineration temperatures. The ash can be formed by using any suitable lime kiln technique in any lime kiln. The ash can be formed by using any suitable gasification technique in any gasification. In one embodiment, the ash or ash component is selected from the group containing boiler ash, lime kiln ash, and their combinations. In one embodiment, the ash includes boiler ash. In one embodiment, the ash is boiler ash. The boiler ash can be formed in any boiler. In one embodiment, the boiler ash or boiler ash component is formed from a sludge which contains reject or rejects from a waste paper treatment, such as from a deinking process, recycled fibre production, a paper mill and/or a waste water treatment plant. The boiler ash can be formed from any sludge by incineration or combustion in any boiler. In one embodiment, the ash based raw material includes ash selected from the group containing boiler ash, lime kiln ash, ash from gasification and their combinations.

In one embodiment, the particle size of the ash based raw material is reduced, e.g. by grinding. In one embodiment, the particle size reduction is made in at least one stage. In this context, particle size reduction means any reduction of the material particle size, e.g. by mechanically. The particle size reduction may be selected from the group of pulverization, grinding, crushing, cutting, chopping, shearing, compressing, breaking up of a material, e.g. by braying or rubbing or by air, by sound wave or by ultrasound, to a desired particle size or other suitable grinding method or their combinations. The particle size reduction can be carried out by means of any suitable method. The particle size reduction can be carried out at one stage or at more than one stage. In one embodiment, the particle size reduction can be made at two stages.

One technical effect of the invention is that different streams from a waste paper treatment can be purified and their quality can be improved. Further, environmental load can be decreased.

In one embodiment, the calcium containing slurry (11) and CO₂ containing reactant (12) are fed into the predetermined water or pulp stream (10) and the carbonation is carried out in the predetermined water or pulp stream.

The calcium containing slurry (11) and CO₂ containing reactant (12) are fed into the predetermined water or pulp stream (10) in one or more step, i.e. one or more process step. In one embodiment, the calcium containing slurry (11) and CO₂ containing reactant (12) are fed into the predetermined water or pulp stream (10) in one process step. When the calcium containing slurry (11) and CO₂ containing reactant (12) are fed into the predetermined water or pulp stream (10) in the same step, it can be ensure that calcium and CO₂ react.

In one embodiment, the calcium containing slurry (11) and CO₂ containing reactant (12) are fed into the predetermined water or pulp stream (10) simultaneously.

In one embodiment, the calcium containing slurry (11) and CO₂ containing reactant (12) are fed into the predetermined water or pulp stream (10) sequentially.

In one embodiment, the calcium containing slurry (11) is led into the water or pulp stream (10) before the CO₂ containing reactant (12).

In one embodiment, the CO₂ containing reactant (12) is led into the water or pulp stream before the calcium containing slurry (11).

In one embodiment, the calcium containing slurry (11) and CO₂ containing reactant (12) are added into a feed direct before a flotation stage (4,7), preferably before the first flotation stage (4), preferably before the main flotation, or alternatively before the second flotation stage (7). In one embodiment, the calcium containing slurry (11) and CO₂ containing reactant (12) are added before any flotation stage. In one embodiment, the calcium containing slurry (11) and CO₂ containing reactant (12) are added before any flotation secondary stage, e.g. secondary stage of the first flotation or post flotation. In one embodiment, the calcium containing slurry and CO₂ containing reactant are added into a feed in one or more step.

In one embodiment, the calcium containing slurry (11) and CO₂ containing reactant (12) are added before a thickening stage (6,8), preferably before the second thickening stage (8) or alternatively before the first thickening stage (6), e.g. into an accept of fine screening before the discs of first loop. In one embodiment, the calcium containing slurry (11) and CO₂ containing reactant (12) can be added before any thickening stage. In one embodiment, the calcium containing slurry and CO₂ containing reactant are added in one or more step.

In one embodiment, the calcium containing slurry (11) and CO₂ containing reactant (12) are added into a feed direct before a disc filter, preferably before the second disc filter or alternatively before the first disc filter. Preferably, the second disc filter has been arranged before the second thickening stage (8). Preferably, the first disc filter has been arranged before the first thickening stage (6). In one embodiment, the calcium containing slurry (11) and CO₂ containing reactant (12) are added before any disc filter. In one embodiment, the calcium containing slurry and CO₂ containing reactant are added into a feed in one or more step.

In one embodiment, the calcium containing slurry (11) and CO₂ containing reactant (12) are added before a water treatment stage selected from the group consisting of a flotation, dissolved air flotation, column flotation, filtration, gravimetric separation and other suitable treatment and their combinations. In one embodiment, the calcium containing slurry (11) and CO₂ containing reactant (12) are added before a dissolved air flotation stage. In one embodiment, the calcium containing slurry (11) and CO₂ containing reactant (12) are added before any water treatment stage. In one embodiment, the calcium containing slurry and CO₂ containing reactant are added in one or more step.

In one embodiment, consistency of the water or pulp stream (10) is between 0.5 - 5.0 %, preferably for pulp samples. In one embodiment, consistency of the water or pulp stream is between 0.5 - 2.0 %, preferably 0 . 7 - 1.5 %. In one embodiment, consistency of the water or pulp stream is below 4 %. In one embodiment, consistency of the water or pulp stream is between 0.01 - 0.5 %, preferably for water samples.

In one embodiment, pH of the water or pulp stream (10) is between 6 to 10, preferably 7 to 10.

In one embodiment, temperature of the water or pulp stream (10) is below 70 °C. In one embodiment, temperature of the water or pulp stream is between 40 - 70 °C.

In one embodiment, the calcium containing slurry (11) and CO₂ containing reactant (12) are fed substantially in the stoichiometric ratio, according to reaction Ca(OH)₂ + CO₂ -> CaCO₃ + H₂O.

In one embodiment, addition of the calcium containing slurry (11) and CO₂ containing reactant (12) are adjusted by measuring pH of the water or pulp stream (10) from the output of the treatment stage. In one embodiment, pH of the water or pulp stream (10) is between 7 to 10, preferably 7 to 9, in the output of the treatment stage.

Preferably precipitated calcium carbonate (PCC) is formed continuously.

In one embodiment, PCC content in the water or pulp stream is between 0.5 - 35 % by weight. In one embodiment, PCC content in the water or pulp stream is between 0.5 - 20 % by weight.

The stream of the deinking plant can be treated by means of an apparatus which comprises at least one feeding device for feeding calcium containing slurry into at least one predetermined water or pulp stream in the deinking plant, and at least one feeding device for feeding CO₂ containing reactant into at least one predetermined water or pulp stream in the deinking plant. The apparatus is arranged in connection with a device in which the predetermined water or pulp stream flows.

In one embodiment, the calcium containing slurry (11) and/or CO₂ containing reactant (12) are fed into the water or pulp stream (10) by means of at least one feeding device which is based on injection feed technique, feed pump technique or other suitable feeding technique. The feeding of the calcium containing slurry and/or CO₂ containing reactant can be made by means of any suitable feeding devices. In one embodiment, the calcium containing slurry and/or CO₂ containing reactant are fed into the water or pulp stream by means of injection feed technique, such as injection mixer or TrumpJet® -type feeding device. In one embodiment, the calcium containing slurry and/or CO₂ containing reactant are fed into the water or pulp stream by means of injection mixer type feeding device. Different injection mixers have been described e.g. in patent publications EP 1064427 and EP 1219344. By means of the injection mixer the calcium containing slurry and/or CO₂ containing reactant can be quickly introduced into the water or pulp stream and evenly mixed into the water or pulp stream.

In one embodiment, the water or pulp stream flows in a tubular type device, e.g. a pipe, tube or the like. In one embodiment, reaction time, e.g. residence time, can be increased in the tubular type device. In one embodiment, the injection mixer has been arranged in connection with the tubular device.

In one embodiment, the calcium containing slurry (11) and/or CO₂ containing reactant (12) is fed by means of one feeding site into the water or pulp stream (10). In one embodiment, the calcium containing slurry and/or CO₂ containing reactant is fed by means of two feeding sites into the water or pulp stream. In one embodiment, the calcium containing slurry and/or CO₂ containing reactant is fed by means of more than two feeding sites into the water or pulp stream.

A product comprises a purified water or pulp composition, such as stream, and precipitated calcium carbonate (PCC). In one embodiment, calcium carbonate has been precipitated onto the contaminants and/or impurities of the water and pulp composition. Preferably, the product is a purified water or pulp composition comprising precipitated calcium carbonate. In one embodiment, the precipitated calcium carbonate composition including contaminants and/or impurities may be separated from the water and pulp composition.

In one embodiment, the purified water stream is recycled to a waste paper treatment. In one embodiment, the purified pulp stream is fed to a paper manufacturing. Alternatively, the purified pulp stream is recycled back to a waste paper treatment.

In one method embodiment, waste water (20) or other water is treated, preferably purified. In one embodiment, waste water, calcium containing slurry which comprises calcium compound and CO₂ containing reactant are mixed, and calcium carbonate is precipitated. In one embodiment, an ash based raw material (21) including calcium compound, e.g. CaO, is used as calcium containing slurry. In one embodiment, the ash based raw material (21) is mixed with water (22) to form an ash slurry (23) having ash content between 0.1 to 30 % by weight, in one embodiment between 0.1 to 10 % by weight, in one embodiment between 5 to 20 % by weight, and in one embodiment between 10 to 15 % by weight. The ash slurry (23) and CO₂ containing reactant, e.g. carbon dioxide (26), is led into a continuous flow reactor (25). The waste water (20) including contaminants and/or impurities is led into the continuous flow reactor (25). Carbonation is carried out in the reactor (25) wherein calcium carbonate is precipitated in order to form a waste water composition (27) including calcium carbonate. Said composition (27) can be in the form of dispersion, slurry, solution, or the like. In one embodiment, waste water (20) containing contaminants and/or impurities is led into the continuous flow reactor (25) before the leading of the ash slurry and carbon dioxide. In one embodiment, the ash slurry (23) is led into the waste water (20) in the continuous flow reactor (25) before than the carbon dioxide is led into the continuous flow reactor (25). In one embodiment, the carbon dioxide (26) is led into the waste water (20) in the continuous flow reactor (25) before than the ash slurry (23) is led into the continuous flow reactor. In one embodiment, the composition (27) includes contaminants and/or impurities after the precipitation of calcium carbonate. In one embodiment, precipitated calcium carbonate and contaminants and/or impurities is removed, e.g. is separated, from the composition, preferably from waste water composition. In one embodiment, calcium carbonate is precipitated onto the contaminants and/or impurities. The method can be used in water purification or in flotation. In one embodiment, the purified water can be recycled to a papermaking. In this context, the waste water may be any waste water, any sewage or a combination of different waste waters and/or sewages. In one embodiment, the waste water comprises water from a groundwood plant or a mixture of groundwood pulp and water. The waste water can be coming from paper industry, paper mill, pulp mill, saw mill, plywood mill, waste paper treatment, deinking process, waste water treatment and/or other suitable mill or process.

The method according to the invention can be used in a treatment of any predetermined water or pulp stream. The treatment can be selected from the group consisting of removal of impurities from a predetermined water or pulp stream, purification of a predetermined water or pulp stream, improvement of yield in connection with a predetermined water or pulp stream, increase of flotation speed of a predetermined water or pulp stream, passivation of stickies in a predetermined water or pulp stream and their combinations. In one embodiment, the method is used for removing impurities from a predetermined water or pulp stream. In one embodiment, the method is used for purifying, such as cleaning, a predetermined water or pulp stream. In one embodiment, the method is used for improving yield in connection with a predetermined water or pulp stream. In one embodiment, the method is used for increasing flotation speed of a predetermined water or pulp stream. In one embodiment, the method is used for passivating stickies in a predetermined water or pulp stream. In one embodiment, the method is used at a flotation stage, e.g. first or second flotation stage, of the deinking plant. In one embodiment, the method is used at a water treatment stage of the deinking plant. In one embodiment, the method is used at a dissolved air flotation stage of the deinking plant. In one embodiment, the method is used at a thickening stage of the deinking plant.

In the present invention, water and pulp streams can be treated, preferably purified, by means of forming precipitated calcium carbonate. When precipitated calcium carbonate is formed in the deinking plant, preferably at a flotation stage, impurities such as dissolved and colloidal material can be adsorbed from the water phase. When precipitated calcium carbonate is formed at a later stage, darker particles and ink particles can be coated and stickies can be passivated. Further, in a preferred embodiment flotation speed is higher and yield is improved. Further, extractives and/or carbohydrates and/or metals can be decreased in the water and pulp streams by means of forming precipitated calcium carbonate. Further, residual ink can be decreased and brightness can be increased in the pulp stream. Further, different ashes can be utilized in the present invention.

The method of the present invention offers a possibility to purify water or pulp stream easily and cost-effectively in a deinking plant. Further, the method of the present invention improves flotation process. The present invention provides an industrially applicable, simple and affordable way of purifying water and pulp streams in the deinking plant.

The method according to the present invention is suitable for use in the purification of the different streams, such as water and pulp streams, in any deinking plants. The present invention brings both economical and ecological benefit.

### EXAMPLES

The invention is described in more detail by the following examples with reference to accompanying Figs. 1 to 5.

### Example 1

In this example, which is shown in Fig. 1, a pulp stream is purified in a deinking plant.

Calcium containing slurry (11), such as milk of lime, and CO₂ containing reactant (12), such as CO₂ gas, are added into a pulp stream (10) before a first flotation (4) of the deinking plant. Precipitated calcium carbonate (PCC) is formed by precipitating in the pulp stream. Then a purified pulp stream (13a) containing PCC is formed. The waste paper (1) is treated at a drum stage (2), or in a batch pulper, and at a coarse and/or prescreening stage (3) before the first flotation stage (4) in order to form the pulp stream (10). The purified pulp stream (13a) is treated at a fine screening stage (5), at a first thickening stage (6), at a second flotation stage (7) and at a second thickening stage (8) after the first flotation stage (4) in order to form a pulp (14) into a paper manufacturing (9).

The calcium containing slurry (11) and CO₂ containing reactant (12) are added into a feed direct before the first flotation stage (4). The calcium containing slurry and CO₂ containing reactant are added in one step.

The calcium containing slurry (11) and CO₂ containing reactant (12) are fed into the pulp stream (10) by TrumpJet® -type feeding device. CO₂ containing reactant is fed by means of one feeding site into the pulp stream.

Impurities such as dissolved and colloidal material can be adsorbed from the water phase. Then the pulp stream is purified. Further, flotation speed can be increased and yield can be improved.

### Example 2

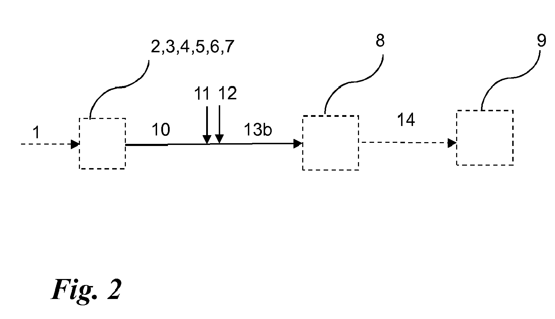

In this example, which is shown in Fig. 2, a pulp stream is purified in a deinking plant.

Calcium containing slurry (11), such as milk of lime, and CO₂ containing reactant (12), such as CO₂ gas, are added into a pulp stream (10) after the second flotation (7) of the deinking plant. The calcium containing slurry (11) and CO₂ containing reactant (12) are added before a second thickening stage (8). The calcium containing slurry and CO₂ containing reactant are added in one step. Precipitated calcium carbonate (PCC) is formed by precipitating in the pulp stream. Then a purified pulp stream (13b) containing PCC is formed. After the forming of precipitated calcium carbonate, the purified pulp stream (13b) is treated at the second thickening stage (8) in order to form a pulp (14) into a paper manufacturing (9). The waste paper (1) is treated at a drum stage (2), at a coarse and/or prescreening stage (3), at a first flotation stage (4), at a fine screening stage (5), at a first thickening stage (6) and at the second flotation stage (7) before the forming of precipitated calcium carbonate in order to form the pulp stream (10).

The calcium containing slurry (11) and CO₂ containing reactant (12) are fed into the pulp stream (10) by TrumpJet® -type feeding device. CO₂ containing reactant is fed by means of one feeding site into the pulp stream.

Darker particles and ink particles can be coated and stickies can be passivated. Then the purified pulp stream is produced. Further, consistency of the pulp stream and brightness can be increased in the pulp stream.

### Example 3

In this example, a pulp stream is purified in a deinking plant according to Fig. 2.

Calcium containing slurry (11), such as milk of lime, and CO₂ containing reactant (12), such as CO₂ gas, are added into a pulp stream (10) after a second flotation (7) of the deinking plant. The calcium containing slurry (11) and CO₂ containing reactant (12) are added into a feed direct before the second disc filter (not shown in Fig. 2). The calcium containing slurry and CO₂ containing reactant are added in one step. Precipitated calcium carbonate (PCC) is formed by precipitating in the pulp stream. Then a purified pulp stream (13b) containing PCC is formed. After the forming of precipitated calcium carbonate, the purified pulp stream (13b) is treated at a second thickening stage (8) in order to form a pulp (14) into a paper manufacturing (9). The waste paper (1) is treated at a drum stage (2), at a coarse and/or prescreening stage (3), at a first flotation stage (4), at a fine screening stage (5), at a first thickening stage (6) and at the second flotation stage (7) before the forming of precipitated calcium carbonate in order to form the pulp stream (10).

The calcium containing slurry and CO₂ containing reactant are fed into the pulp stream by TrumpJet® -type feeding device. CO₂ containing reactant is fed by means of one feeding site into the pulp stream.

Darker particles and ink particles can be coated and stickies can be passivated. Then the purified pulp stream is produced. Further, consistency of the pulp stream and brightness can be increased in the pulp stream.

### Example 4

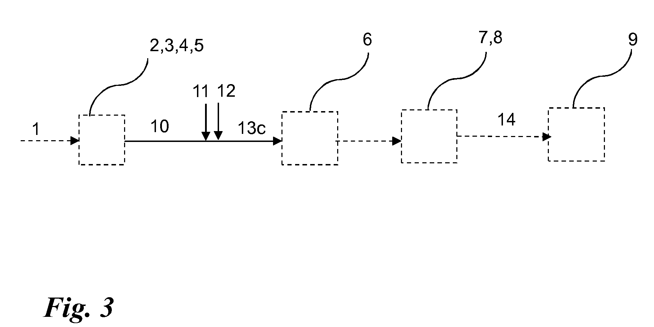

In this example, which is shown in Fig. 3, a pulp stream is purified in a deinking plant.

Calcium containing slurry (11), such as milk of lime, and CO₂ containing reactant (12), such as CO₂ gas, are added into a pulp stream (10) after a fine screening (5) of the deinking plant. The calcium containing slurry (11) and CO₂ containing reactant (12) are added into an accept of post classifying before the discs of first loop (not shown in Fig. 3). The calcium containing slurry and CO₂ containing reactant are added in one step. Precipitated calcium carbonate (PCC) is formed by precipitating in the pulp stream. Then a purified pulp stream (13c) containing PCC is formed. The waste paper (1) is treated at a drum stage (2), at a coarse and/or prescreening stage (3), at a first flotation stage (4) and at the fine screening stage (5) before the forming of precipitated calcium carbonate in order to form the pulp stream (10). After the forming of precipitated calcium carbonate, the purified pulp stream (13c) is treated at a first thickening stage (6), at the second flotation stage (7) and at a second thickening stage (8) in order to form a pulp (14) into a paper manufacturing (9).

The calcium containing slurry and CO₂ containing reactant are fed into the pulp stream by TrumpJet® -type feeding device. CO₂ containing reactant is fed by means of one feeding site into the pulp stream.

Impurities such as dissolved and colloidal material can be adsorbed from the water phase. Then the pulp stream is purified. Further, flotation speed can be increased and yield can be improved.

### Example 5

In this example, a water stream is purified in a deinking plant.

Calcium containing slurry, such as milk of lime, and CO₂ containing reactant, such as CO₂ gas, are added into a water stream before a dissolved air flotation stage of the deinking plant. The calcium containing slurry and CO₂ containing reactant are added in one step. Precipitated calcium carbonate (PCC) is formed by precipitating in the water stream. Then a purified water stream containing PCC is formed.

The calcium containing slurry and CO₂ containing reactant are fed into the water stream by TrumpJet® -type feeding device. CO₂ containing reactant is fed by means of one feeding site into the water stream.

Impurities such as dissolved and colloidal material can be adsorbed from the water phase. Then the water stream is purified.

### Example 6

In these pilot tests a RCF pulp stream was treated. Pilot tests were done with three sample points: A) in feed to the first flotation; B) in accept of post classifying; and C) in feed to the second disc filter.

Milk of lime and CO₂ gas were added into a pulp stream in feed to the first flotation, in accept of post classifying and in feed to the second disc filter.

The milk of lime and CO₂ gas were fed by means of one feeding site into the pulp stream in the pipe by TrumpJet® -type feeding device. The flow rate of the pulp stream was 2 l/s and the pipe diameter was 50 mm.

Consistency of the pulp stream was about 1.2 % in sample A. Temperature of the pulp stream was about 50 °C and pH was 9 - 9.2 in sample A.

Consistency of the pulp stream was about 0.9 % in sample B. Temperature of the pulp stream was about 50 °C and pH was 9 - 9.2 in sample B.

Consistency of the pulp stream was about 0.9 % in sample C. Temperature of the pulp stream was about 58 °C and pH was 8.2 - 8.5 in sample C.

Precipitated calcium carbonate (PCC) was formed continuously by precipitating in the pulp stream. Two levels of PCC were produced: 20 % and 35 %.

Samples from the containers were fed to the pilot without any dilution. Also milk of lime was used without dilution. These practical arrangements made the PCC content quite high in the final samples. Milk of lime addition and CO₂ addition were adjusted by measuring pH from the output.

In the test it was observed that impurities such as dissolved and colloidal material could be adsorbed from the water phase, especially in connection with sample A.

Further, it was observed that contents of extractives and carbohydrates decreases. Also clear improvement in brightness and residual ink was noticed. The strongest effect was found in the sample A.

Further, it was observed that stickies can be passivated. The strongest effect was found in the sample C.

### Example 7

In this pilot scale test a RCF pulp stream was purified in a deinking plant.

Milk of lime and CO₂ gas were added into a pulp stream before a flotation of the deinking plant. Milk of lime and CO₂ gas were fed into an inlet of the flotation stage. Milk of lime (80 g/l) was diluted to 5 g/l.

The milk of lime and CO₂ gas were fed by means of one feeding site into the pulp stream by a TrumpJet feeding device. Consistency of the pulp stream was about 1.4 %. The flow rate of the pulp stream was about 2 l/s, and temperature was about 51 - 52 °C. In the test, feed rate of milk of lime (5 g/l) was about 0.1 - 0.2 l/s and feed rate of CO₂ gas was between 1.2 - 1.7 kg/h.

Precipitated calcium carbonate (PCC) was formed continuously by precipitating in the pulp stream. Amount of PCC was between 2 - 5 %.

In the test it was observed that there are no problems with runnability. Turbidity, COD and charge decreased. Further, it was observed that final pH 8.8 was good. At pH 7 Ca and Mg amounts were high. The effects could be seen with small amounts of PCC. Addition of milk of lime firstly gave a bit better results. Further, it was observed that extractives and carbohydrates can be decreased. Further, it was observed that speed of the flotation increased.

### Example 8

In this mill scale test a RCF pulp stream was purified in a deinking plant.

Milk of lime and CO₂ gas were added into a pulp stream before a first flotation of the deinking plant. The pulp stream was fed into two lines so that the flow rate of the pulp stream was about 289 l/s in both lines. The milk of lime and CO₂ gas were added into a feed direct before the first flotation stage in line 1. In line 2, the milk of lime and CO₂ gas were not added into the pulp stream.

The milk of lime (9 %) and CO₂ gas were fed by means of two feeding sites into the pulp stream by two TrumpJet® -type feeding devices. Consistency of the pulp stream was about 1.4 %. In the first test (trial points 1 and 2), feed rate of milk of lime (9 %) was 30 l/min and feed rate of CO₂ gas was between about 109 to 114 kg/h. In the second test (trial points 3 and 4), feed rate of milk of lime (9 %) was 60 l/min and feed rate of CO₂ gas was between about 165 to 180 kg/h. The feed of CO₂ was adjusted according to pH by means of rotameters. The feed of the milk of lime was kept constant.

Precipitated calcium carbonate (PCC) was formed continuously by precipitating in the pulp stream in line 1. There were three sample points in both lines: feed, accept and reject. Results of trial points 1 - 4 were compared with results of reference points. Reference point 1 was before the trial, and reference point 2 was after the trial. Trial point 1 was at 10:25, trial point 2 was at 12:30, trial point 3 was at 14:45 and trial point 4 was at 16:40 when the trial started 8:44 and stopped 17:38. Higher addition of the CO₂ and milk of lime, i.e. the second test, started about 13:00. The results of the first and second tests in line 1 are shown in table 1. Further, the results were compared with results of line 2.

**Table 1**

| | Turbidity | COD, mg O₂/l | Charge |
|---|---|---|---|
| Ref. point 1 | | | |
| -feed | 5577 | 2875 | -1.624 |
| -accept | 5633 | 2935 | -1.693 |
| -reject | 2958 | 2943 | -1.731 |

| Trial point 1 | | | |
|---|---|---|---|
| -feed | 3167 | 2700 | -1.61 |
| -accept | 2936 | 2713 | -1.506 |
| -reject | 2507 | 2600 | -1.754 |

| Trial point 2 | | | |
|---|---|---|---|
| -feed | 3086 | 2665 | -1.367 |
| -accept | 3208 | 2518 | -1.363 |
| -reject | 1533 | 2475 | -1.507 |

| Trial point 3 | | | |
|---|---|---|---|
| -feed | 3061 | 2605 | -1.262 |
| -accept | 3068 | 2495 | -1.234 |
| -reject | 1151 | 2340 | -1.363 |

| Trial point 4 | | | |
|---|---|---|---|
| -feed | 2984 | 2610 | -1.224 |
| -accept | 3062 | 2435 | -1.17 |
| -reject | 1129 | 2265 | -1.318 |

| Ref. point 2 | | | |
|---|---|---|---|
| -feed | 3028 | 2728 | -1.332 |
| -accept | 2982 | 2433 | -1.311 |
| -reject | 1462 | 2310 | -1.337 |

In the tests it was observed that reaction between the CO₂ and milk of lime was under control and that it is possible to form PCC continuously in the feed to the flotation. Further, it was observed that process waters were cleaned. Turbidity, COD and charge decreased. Turbidity decreased in feed and in accept clearly after the start-up of the trial in tests when turbidity of trial points is compared with reference point 1. Negative charge decreased in the accept of trial points in comparison with reference point 1. The charge was closer to zero. COD decreased during all the time when PCC was produced continuously, i.e. COD decreased in the trial points in comparison with reference points. Calcium carbonate content, including the calcium carbonate of the pulp stream and the precipitated calcium carbonate, was low in feed and accept, about between 10 to 20 %, and higher in reject, about between 50 to 55 %. So the calcium carbonate seems to go to reject.

Further, in the tests it was observed that brightness in accept of the trial points increased in line 1 in comparison with reference points. Further, it was observed that there were not problems with calcium, magnesium, sulphur, silicon, sodium and potassium contents in water. Further, phosphorous and manganese contents decreased as always when PCC was formed continuously. Further, residual ink slightly decreased in accept and in feed in comparison with reference points.

Further, in the tests it was observed that there are no problems with runnability. Further, it was observed that speed of the flotation increased. Further, ash in circulations of flotation seemed to be reduced.

Further, in the tests it was observed that COD decreased in the trials of line 1 in comparison with the trials of line 2. Further, it was observed that process waters can be cleaned when PCC is formed continuously.

### Example 9

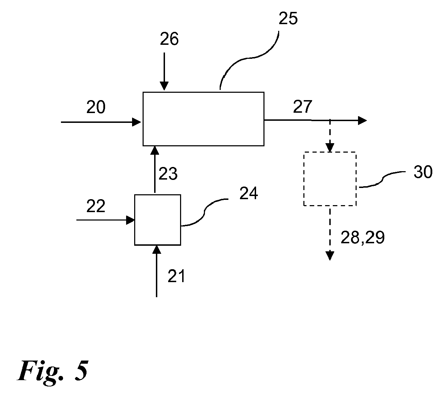

In this example, which is shown in figure 5, waste water 20 is purified.

An ash based raw material 21 containing calcium oxide, CaO, is mixed with water 22 to form an ash slurry 23 having ash content between 10 to 30 % by weight in a mixing step 24. Waste water 20 containinig contaminants and/or impurities is fed into a continuous flow reactor 25 which is a tubular reactor, and the ash slurry 23 is fed, preferably by means of an injection mixer, into the continuous flow reactor 25. Carbon dioxide 26 is led into the continuous flow reactor 25 and the carbonation is carried out in the reactor. Calcium carbonate is precipitated in the ash slurry 23, and a waste water composition 27 including calcium carbonate and contaminants and/or impurities is formed.

The ash includes CaO. The waste water includes impurities. Carbon dioxide is fed. CaCO₃ is precipitated. Impurities are coated with calcium carbonate.

CaO + H₂O -> Ca(OH)₂ + CO₂ -> CaCO₃

A precipitated compound including calcium carbonate 28 and impurities 29 may be removed from the waste water composition 27 in a removal step 30. The purified waste water is recycled into paper making process.

In the test it was observed that waste water can be purified. Further, it was observed that contaminants and impurities of waste water can be changed into non-harmful form and COD of waste water can be decreased thanks to the ash. Further, it was observed that the ash based raw material can be utilized in the treatment of the stream.

### Example 10

In this test water cleaning effect was examined.

Groundwood pulp was diluted to the consistency of approximately 1 % and then it was fed to the reactor. Ash slurry in the consistency of 12 % and CO₂ were fed through TrumpJet feeding devices. COD, turbidity and the charge level were determined from a mixture of groundwood pulp and water before and after the carbonation.

COD in the groundwood pulp mixture before the carbonation was 337 mg O₂/l, and after the carbonation 268.5 mg O₂/l. Turbidity in the groundwood pulp mixture before the carbonation was 88.4, and after the carbonation 2.93. It was observed that COD of waste water can be decreased. The charge level in the groundwood pulp mixture before the carbonation was about -0.120 and after the carbonation over 0.000. The effect of the carbonation with ash slurry is especially pronounced on the turbidity and the charge level of the filtrate. It gives indication that extractives have been removed from the filtrate.

In the test it was observed that the waste water can be purified. Further, it was observed that COD of the waste water can be decreased.

### Example 11

In this pilot scale test a RCF pulp stream was purified in a deinking plant.

Ash slurry and CO₂ gas were added into a pulp stream before a flotation of the deinking plant. The 12 % ash slurry was formed from finely ground ash (Elurit® ash) by mixing the ash with water in a mixing device. The ash slurry contained 23 % calcium oxide, CaO. The ash slurry and CO₂ gas were fed into an inlet of the flotation stage.

The ash slurry and CO₂ gas were fed by means of one feeding site into the pulp stream by a TrumpJet feeding device. Consistency of the pulp stream was about 1.4 %. The flow rate of the pulp stream was about 2 l/s, and temperature was about 51 - 52 °C. In the test, feed rate of the ash slurry was between 0.048 (test 2.1) - 0.125 l/s (test 2.3) and feed rate of CO₂ gas was between 3.2 (test 2.1) - 10.2 kg/h (test 2.3).

Precipitated calcium carbonate (PCC) was formed continuously by precipitating in the pulp stream. Amount of PCC was between 5 (test 2.1) - 16 % (test 2.3).

In the test it was observed that the ash slurry worked well, and there are no problems with runnability. Turbidity, COD and charge decreased. Further, it was observed that final pH over 9 was good. Further, it was observed that extractives can be decreased. Further, it was observed that speed of the flotation increased.

### Example 12

In this example the mill scale test according to example 8 was continued. Duration of this test was 4 days in which a proper trial run was 3 days and the rest, 1 day, comprised preliminay work, start-up and finishing of the test. In this test a precipitation of calcium carbonate and a purification of process water were studied.

In the tests, milk of lime (9 %) and CO₂ gas were fed into a continuous RCF pulp stream in the feed to pre-flotation. The RCF pulp stream flowed in a tubular type device. The milk of lime and CO₂ gas were fed into the pulp stream in the same process step. The milk of lime was fed by an injection feed device during first 1.5 days. After that, next 1.5 days, the milk of lime was fed by a feed pump to a suction side of the flotation feeding pump. CO₂ gas was fed after the flotation feeding pump by means of an injection feed device from a CO₂ tank. The CO₂ gas feed was adjusted by rotameters, about between 50 - 110 kg/h. The feed of the milk of lime was tried to keep constant at level of 30 l/min (about 2 days) and at level of 60 l/min (about one day).

Precipitated calcium carbonate (PCC) was formed continuously by precipitating in the pulp stream. The amount of PCC was around 1 % of the solids in the stream. The samples from the pulp stream and process water stream were compared with reference samples (without feeding of milk of lime and CO₂ gas).

In the tests it was observed that it is possible to form PCC continuously in the feed to the flotation. Further, it was observed that reaction between the CO₂ and milk of lime can be kept under control in the pre-flotation. Further, it was observed that there are no problems with runnability. Further, it was observed that speed of the flotation increased.

Further, it was observed that process waters can be cleaned when PCC is formed continuously. Turbidity, anionicity, COD and conductivity clearly decreased when PCC was produced.

Further, it was observed that the precipitation of the calcium carbonate has not negative effect on chemical consumption. Further, it was observed that the precipitation of the calcium carbonate has positive effect on pinholes and spots of paper.

The method according to the present invention is suitable in different embodiments to be used in different process. The method according to the present invention is suitable in different embodiments to be used for purifying the most different kinds of water and pulp streams.

The invention is not limited merely to the example referred to above; instead many variations are possible within the scope of the inventive idea defined by the claims.

## Claims

1. A method for treating a stream of a deinking plant, wherein the method comprises
- adding calcium containing slurry (11), which comprises CaO, Ca(OH)₂, lime, milk of lime, calcium salt based composition and/or ash based raw material comprising calcium compound, and CO₂ containing reactant (12) into at least one predetermined water or pulp stream (10) in the deinking plant, and the water or pulp stream (10) is a continuous flow which flows in a tubular type device, and
- forming precipitated calcium carbonate by precipitating in the predetermined continuous water or pulp stream in the tubular type device.

2. The method according to claim 1, wherein the CO₂ containing reactant (12) is selected from CO₂-gas, CO₂ containing solution and CO₂ containing flue gas.

3. The method according to claim 1 or 2, wherein the predetermined water or pulp stream (10) is selected from water stream of the deinking plant and RCF pulp stream of the deinking plant.

4. The method according to any one of claims 1 to 3, wherein the ash based raw material is mixed with water to form an ash slurry, and the ash slurry has ash content between 0.1 to 30 % by weight.

5. The method according to any one of claims 1 to 4, wherein the ash based raw material includes ash selected from the group containing boiler ash, lime kiln ash, ash from gasification and their combinations.

6. The method according to any one of claims 1 to 5, wherein the calcium containing slurry (11) and CO₂ containing reactant (12) are fed into the predetermined water or pulp stream (10) in one process step.

7. The method according to any one of claims 1 to 6, wherein the calcium containing slurry (11) and CO₂ containing reactant (12) are added into a feed direct before a flotation stage (4).

8. The method according to any one of claims 1 to 7, wherein the calcium containing slurry (11) and CO₂ containing reactant (12) are added before a thickening stage (6,8).

9. The method according to any one of claims 1 to 8, wherein the calcium containing slurry (11) and CO₂ containing reactant (12) are added into a feed direct before a disc filter.

10. The method according to any one of claims 1 to 9, wherein the calcium containing slurry (11) and CO₂ containing reactant (12) are added before a water treatment stage selected from the group consisting of a flotation, dissolved air flotation, column flotation, filtration, gravimetric separation and other suitable treatment and their combinations.

11. The method according to any one of claims 1 to 10, wherein consistency of the water or pulp stream (10) is between 0.5 - 5.0 %.

12. The method according to any one of claims 1 to 11, wherein consistency of the water or pulp stream (10) is between 0.01 - 0.5 %.

13. The method according to any one of claims 1 to 12, wherein the calcium containing slurry (11) and/or CO₂ containing reactant (12) are fed into the water or pulp stream (10) by means of at least one feeding device which is based on injection feed technique, feed pump technique or other suitable feeding technique.

14. The method according to any one of claims 1 to 13, wherein addition of the calcium containing slurry (11) and CO₂ containing reactant (12) are adjusted by measuring pH of the water or pulp stream (10) from the output of the treatment stage, and pH of the water or pulp stream (10) is between 7 to 10.

15. A product, wherein the product is formed by the method of any one of claims 1 to 14, and the product comprises water or pulp composition including precipitated calcium carbonate.

16. A use of the method of any one of claims 1 to 14, wherein the method is used in a treatment of predetermined water or pulp stream, and the treatment is selected from the group consisting of removal of impurities from a predetermined water or pulp stream, purification of a predetermined water or pulp stream, improvement of yield in connection with a predetermined water or pulp stream, increase of flotation speed of a predetermined water or pulp stream, passivation of stickies in a predetermined water or pulp stream and their combinations.
